Europäisches Patentamt

European Patent Office

Office européen des brevets

(11) Publication number: **0 330 600**
**A1**

(12) **EUROPEAN PATENT APPLICATION**

(21) Application number: 89500011.5

(22) Date of filing: 02.02.89

(51) Int. Cl.⁴: **F 02 M 31/12**

(30) Priority: 02.02.88 ES 8800293

(43) Date of publication of application:
30.08.89 Bulletin 89/35

(84) Designated Contracting States:
AT BE CH DE FR GB GR IT LI LU NL SE

(71) Applicant: Esteban Calvo, José Manuel
Batel 12 Alameda de Osuna
E-28042 Madrid (ES)

(72) Inventor: Esteban Calvo, José Manuel
Batel 12 Alameda de Osuna
E-28042 Madrid (ES)

(74) Representative: Garcia Cabrerizo, Francisco
OFICINA GARCIA CABRERIZO S.L. Vitruvio 23
E-28006 Madrid (ES)

(54) **Electronic system for heating fluids to be specially applied to internal-combustion engines.**

(57) The electronic system for heating fluids to be specially applied to internal-combustion engines, in accordance with the invention, includes a helically wound duct around the block of electrical resistances through which the fluid circulates, being the whole within a wrapping isolating frame. The portions of the duct which define the fluid inlet and outlet take a radial and emerging arrangement from the lateral surface of the frame. The temperature is controlled by an electronic circuit depending upon the cylinder capacity of the engine, the exterior temperature and the fuel used, being collected the temperature by a sensor preferably arranged in axial position in the frame.

EP 0 330 600 A1

## Description

## ELECTRONIC SYSTEM FOR HEATING FLUIDS TO BE SPECIALLY APPLIED TO INTERNAL-COMBUSTION ENGINES

The present invention refers to an electronic system for heating fluids to be specially applied to internal-combustion engines.

As it is known, when a fluid runs a duct helicoidally wound around a focus of heat, a heat exchange is originated increasing the fluid temperature, when passing through the winding. If the fluid used is precisely the fuel which feeds an internal-combustion engine, gasoline or diesel, being interconnected respectively between the fuel pump and the carburetor or in the entrance pipe to the injection pump, a gasification of the liquid fuel is obtained which, upon mixing with the outer air in the carburetor or in the compression space of cylinders, improves the combustion and the said space is filled with a lower amount of fuel, with the consequent availability of the latter and, therefore, with less consumption and pollution.

In accordance within the invention, these characteristics are optimized upon having as a focus of heat a block of electric resistances under a cylindrical cartridge shape on which the duct through which the fuel is to be circulated, is helicoidally wound, being the whole embeded in a wrapping frame, emerging in a radial direction the portions of the said duct which define the fuel inlet and outlet.

By means of a sensor which is preferably arranged in an axial position, integrated in an outer electronic circuit, the temperature control is attained so that it be the most suitable at any time and in any engine rate, and the gasification takes place at the few instants from the starting for a better availability.

Due to the fact that the boiling point of the fuel has a different and intrisic value to its nature since the one corresponding to gasoline is 62.3°C whilst that corresponding to gas-oil reaches a value of 91.8°C, the electronic component which regulates the temperature through the said sensor should hold and adapt the temperature at the required value. The electronic component also regulates the temperature for the gasification of the fuel utilized, irrespective of the cylinder capacity of the engine and of the temperature of the exterior medium since a higher cylinder capacity supposes a longer operation time of the block of electric resistances so that the fuel flow which goes across the helical duct may reach the temperature required and that the latter be independent from the outer temperature for the several seasons of the year and for the correct operation in different places with remarkable temperature differences.

In the boiling point of the fuel, the moisture is lost and there exists a separation of negative ions and excitation of same whereby hydrocarbons are separated in ions. In this gasification state, the fuel is mixed with outer air to fill the compression space with a lower amount of fuel, with the corresponding improvement in combustion, as previously said.

As the entrance duct to the helical winding incides radially with respect to the first loop, and the last loop is also extended orthogonally in the outlet duct, the fuel is electrically heated with a vertical cutout at its inlet and another at its outlet, making many of the molecules which form the hydrocarbons more combustible. Also, the acitrogenated groups, upon separating, become more combustible and the same happens partly to HO groups.

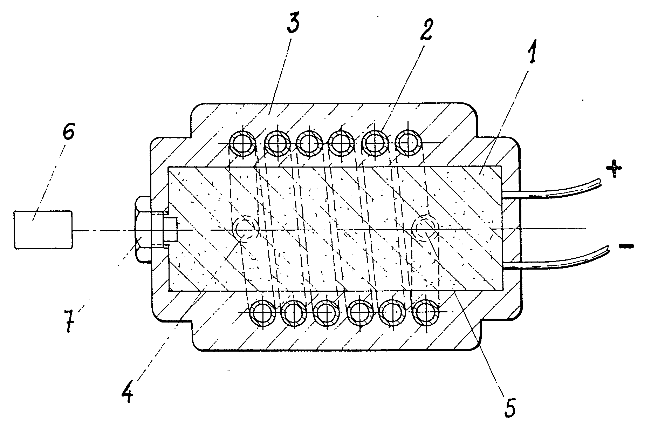

In order to understand the characteristics of the invention and forming part of this specification, a sheet of drawings is attached in which unique figure, with illustrative and non limitative character, it has been illustrated a diagrammatic view in longitudinal cross-section elevation of the electronic system for heating fluids to be specially applied to internal-combustion engines.

Making allusion to the reference numerals quoted in the said figure, it can be appreciated that, in accordance with the invention, it is provided a block of electrical resistances with the reference numeral 1 under a cylindrical cartridge shape, connected to the battery to provide the required temperature. On this compact block of resistances, the duct 2 is wound which will be traveled by the fuel to be heated, absorbing heat by heat exchange.

The block of electric resistances and the said helical winding are covered by an isolating frame 3 to prevent the heat from escaping to the exterior, emerging at the lateral wall of the frame the tubular portions which define the inlet 4 and the outlet 5 of the fluid, both of them arranged in a radial direction.

The electronic component 6 regulates the temperature collected by the sensor 7, depending upon the cylinder capacity of the engine, the temperature of the exterior and the fuel used.

With this arrangement and by means of the electronic system 6, it is attained to maintain the temperature constant at the point in which the above-mentioned improvements of the fuel are reached.

## Claims

1.- Electronic system for heating fluids to be specially applied to internal-combustion engines, wherein the fluid runs over a duct helically wound around the focus of the heat for its heat exchange, characterized in that the focus of heat is determined by a block of electrical resistances which is arranged as a cylindrical core for the winding of the said duct runned over by the fluid, being the whole embedded in a wrapping isolating frame from which the portions of the duct defining the fluid inlet and outlet emerge radially, being provided a sensor preferably arranged in axial position to regulate the temperature controlled by an electronic circuit, depending upon the cylinder capacity of the engine, the exterior temperature and the fuel used.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 588 360 (BIDAUX)<br>* Abstract; page 1, lines 14-21; figure 1 * | 1 | F 02 M 31/12 |
| A | US-A-1 544 159 (JENTO)<br>* Page 1, lines 42-79 * | 1 | |
| A | US-A-2 247 816 (McILRATH)<br>* Page 1, lines 32-37,43-55; page 2, lines 18-33 * | 1 | |
| A | FR-E- 5 941 (BREMANT)<br>* Page 1, lines 26-38; page 2, lines 20-35 * | 1 | |
| A | US-A-1 467 281 (ARMSTRONG) | | |

TECHNICAL FIELDS
SEARCHED (Int. Cl.4)

F 02 M
F 24 H
F 23 K

The present search report has been drawn up for all claims

| Place of search | Date of completion of the search | Examiner |
|---|---|---|
| THE HAGUE | 05-06-1989 | JORIS J.C. |

EPO FORM 1503 03.82 (P0401)